# EUROPEAN PATENT APPLICATION

(11) **EP 4 253 121 A1**
(43) Date of publication of application: **04.10.2023**
(21) Application number: 22184999.5
(22) Date of filing: 14.07.2022
(51) Int. Cl.: B60K 17/344, B60K 23/08, B60K 17/346, B60K 5/02

(54) **A TRUCK, PREFERABLY OF THE NP6 PIAGGIO BRAND TYPE, WITH TWO DRIVING WHEELS MODIFIED WITH FOUR-WHEEL DRIVE**

(30) Priority: 29.03.2022 IT 202200006188
(71) Applicant: Cucini, Simona, 50052 Certaldo (IT)
(72) Inventor: Cucini, Simona, 50052 Certaldo (IT)
(74) Representative: Emmi, Mario

(57) **Abstract**

This invention relates to a method for modifying a truck from two- to four-wheel drive, said truck comprising an engine connected to the original vehicle gearbox and a rear drive shaft. The following steps are provided:
- Application of a transfer (30);
- Removal of the original crossmember and anchoring in its place of a new modified crossmember (50) which supports and protects a front differential (100);
- Arrangement of the front differential (100) in the housing formed by said new modified crossmember (50);
- And wherein introduction is provided of said front transmission shaft which is connected to said rear part of the transfer (30) and which, by said rear part of the transfer, is connected to the front differential (100);
- A new stub axle and a new arm are integrated.

## Description

### Scope of the invention

The technical field of this invention relates to truck type vehicles and which are normally two-wheel drive.

In particular, the invention relates to a method for modifying said truck and related modified truck in order to be able to transform it from two- to four-wheel drive, in particular the Piaggio brand NP6 model truck.

### Overview of the prior art

The N1 truck model vehicle (N1 indicates the weight category of up to 3.5 tons fully loaded) has been known and marketed for some time. It is widely used in various fields of work ranging from construction, for example for the transport of material, to private use.

These vehicles generally come in the form of two drive wheels, rear-wheel drive.

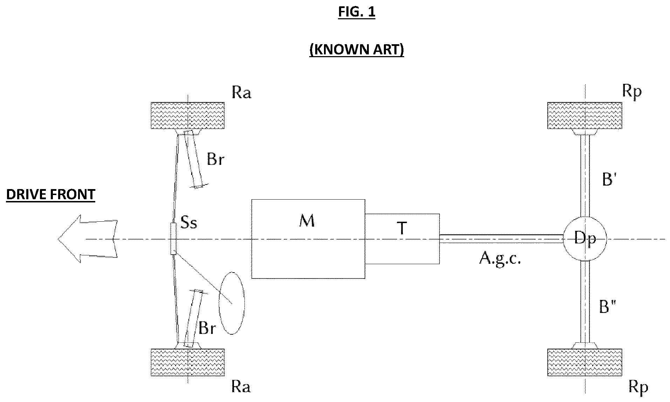

Figure 1 structurally schematizes the vehicle as it leaves the factory.

The two front wheels are therefore idler wheels and connected to the vehicle chassis via the suspension arms, shock absorbers and steering arms. An engine (M) is therefore provided, for example otto cycle or diesel, which is connected to a transmission unit (T). At the output of the transmission unit there is an axle (in particular, a shaft) with a cardan joint (Agc) which receives the rotation thanks to the transmission unit (T). The transmission unit, well known in the state of the art, has within suitable gears which receive the rotation motion from the engine (M) and transmit it to the cardan joint axle (Agc) at the output (i.e. the output shaft), varying its rotation speed in continuous or discrete fashion (automatic or manual gearbox) and consequently the drive torque that can be transmitted to the ground. This shaft (Agc) is then connected to a rear differential (Dp) which transfers this rotation, according to the planned final ratios, to the two transversal axles (B', B") that go to the rear wheels (Rp). The rear wheels, in accordance with this solution, are therefore the driving wheels whereas the front wheels, as anticipated, are merely idler wheels, dragged along by the movement of the vehicle.

However, depending on the uses for which this truck is intended, there is an ever greater need to have more traction and the need to be able to use four-wheel drive when necessary is therefore also greater.

In fact, cases of traveling with a full load and having to traverse impervious areas and/or with high slopes and/or conditions of poor grip are quite frequent. In this case, the simple traction of the vehicle with only the two rear driving wheels may not be enough to transmit to the road surface the power required to tackle these slopes, thus limiting the truck's performance and possible uses.

Often the user has already purchased the vehicle but realizes when using it that he would need a better performing vehicle, in particular with four-wheel drive, to suit his purposes. Buying a new vehicle, however, may involve excessive expense.

There is therefore a deep-felt need to be able to modify said vehicles from two-wheel to four-wheel drive with a transformation that is simple and economical and can therefore be completed in a short time and with very little impact on the vehicle of structural modifications.

Also known are the Italian publications FI2013U000059, 202019000001222 and 202019000001220 which concern the transformation of some vehicles from two- to four-wheel drive.

### Summary of the invention

It is therefore an object of this invention to provide a truck, preferably of the Piaggio brand NP6 model, allowing the above-mentioned technical drawbacks to be solved at least in part.

In particular, the object of this invention is to provide a new type of truck which includes structural elements that allow it to be modified from two-wheel drive to four-wheel drive, in a simple and functional way, in particular without structurally weakening the vehicle itself and with low economic impact.

These and other objects are therefore achieved with the present method for modifying, in accordance with claim 1, a truck, preferably NP6 model, Piaggio brand, in such a way as to transform it from two- to four-wheel drive.

More specifically, a method is described here for modifying a truck from two- to four-wheel drive, preferably a truck of the Piaggio NP6 type, said truck comprising an engine connected to the original vehicle gearbox and a rear drive shaft (10), the method comprising the following steps:
- Removal of the original transmission cover from said original gearbox (20) of the vehicle and application of a transfer (30) to the remaining part of the vehicle gearbox, said transfer (30) having a first part whose profile matches the profile of the part of the gearbox from which said transmission cover has been removed, said two profiles being coupled and connected to each other, the transfer (30) comprising a second part containing the transmission gears with a coupling to a front transmission shaft (40);
- And wherein the following further operations are provided:
- Removal of the original front crossmember and, in its place, anchoring of a new front crossmember (50) modified with respect to the original front crossmember removed, said new front crossmember supporting a front differential (100);
- Arrangement of the front differential (100) in the housing formed by said new modified crossmember (50);
- And wherein introduction is provided of said front transmission shaft (40) which is connected, at one end, to said second part of the transfer (30) in engagement with one or more of the transfer gears and, at the opposite end, connecting to the front differential (100) in such a way as to rotate and transmit the acquired rotation to said front differential;
- The new front crossmember being made in two or more parts connected to each other in such a way as to obtain a crossmember having at least two anchoring zones (53) forming, each one, an anchoring plane (53a) which is connected to the original vehicle structure and with said crossmember provided with two fulcrum points (57') spaced apart for hinging of the arms, each one of said two fulcrum points (57') being respectively arranged below said anchoring plane on the side opposite the surface of the anchoring plane that connects to the original vehicle structure, said two fulcrum points translating the original hinging position of the original arms in such a way as to allow the insertion of the front differential (100), and wherein the method further provides for removal of the vehicle's original arms and replacement of these original arms with arms (70) of suitable length which are hinged each one to a said fulcrum point (57), each arm having a hole into which is inserted a head (75) which connects to the stub axle assembly, the method further providing for removal of the original stub axle assembly and its replacement with a stub axle assembly with three radial arms (80) having a central hole for the insertion of a constant velocity joint.

In this way, the desired modification can be made easily.

In particular, in this way it is now possible to allow the user to selectively engage a two-wheel or four-wheel drive mode depending on requirements.

A special control system located in the cabin will allow the desired mode to be selected.

The control system commands the activation of the front transmission shaft together with the rear one or the activation of only one of the two, preferably only the rear one (therefore preferably 4x4 drive or only the rear drive can be selected).

A step of insertion is therefore provided of a special control system located in the cabin that allows the mode of operation (two or four-wheel drive) to be selected.

Advantageously, in said new crossmember, said anchoring parts (53) are spaced apart and rigidly joined together through a front part (55, 58) comprising a bar (58) having said fulcrum point (57') at its two ends and at the rear through a further bar (52) and two vertical legs (51) each one connected to an anchoring plane on the opposite side to that of connection with the original vehicle structure, said two vertical legs (51) each comprising a hole to which is fixed a further bar (54) parallel to the bar (52), the method providing for arrangement of the front differential (100) in the space delimited laterally by said anchoring parts (53) and at the front by the front part (55, 58) providing for locking the differential through fixing of the bar (54) to the ends of the vertical legs (51) in such a way that said front differential is connected to said bar (54) and, at the front, to the front part (55, 58).

A particularly advantageous form of the invention comprises:
- Removal of the original transmission cover from said original gearbox (20) of the vehicle and application of a transfer (30) to the remaining part of the vehicle gearbox, said transfer (30) having a first part whose profile matches the profile of the part of the gearbox from which said transmission cover has been removed, said two profiles being coupled and connected to each other, the transfer (30) comprising a second part containing the transmission gears with a coupling to a front transmission shaft (40);
- Removal of the original front crossmember and anchoring in its place of a new modified crossmember (50) supporting a front differential (100);
- Advantageously, both the original and the modified crossmember, as is well known, perform a function of supporting the suspension arms, a function of connection between the longitudinal members of the vehicle and also of supporting the steering box. In particular, it carries out a structural function of connecting the longitudinal members of the chassis as well as bearing the steering box and the fulcrums of the swinging arms.
- A step therefore follows for arrangement of the front differential (100) in the housing formed by said new modified crossmember (50);
- And wherein the introduction is provided of said front transmission shaft (40) which is connected to said second part of the transfer (30) in engagement with one or more of the transfer gears and with said front transmission shaft (40) which, from said second part of the transfer, connects to the front differential (100) in such a way as to rotate and transmit this rotation to the front differential;
- And wherein the new front crossmember is made in several parts connected to each other in such a way that a crossmember having two anchoring parts (53) is obtained, each one forming an anchoring plane which is connected to the original vehicle structure, said anchoring parts (53) being spaced apart and joined together rigidly through a front part (55, 58) comprising a bar (58) having at its two ends a fulcrum point and at the rear through a further bar (52) and two vertical legs (51) each one connected to an anchoring plane on the opposite side to that of connection with the original vehicle structure, said two vertical legs (51) each comprising a hole to which a further bar (54) parallel to the bar is fixed ( 52), the method providing for the arrangement of the front differential (100) in the space delimited laterally by said anchoring parts (53) and at the front by the front part (55, 58) providing to block the differential by fixing of the bar (54) to the ends of the vertical legs (51) so that said front differential is connected to said bar (54) and, at the front, to the front part (55, 58), and wherein the method further provides for the removal of the original vehicle arms and the replacement of these original arms with arms (70), preferably ambidextrous, which are hinged each to a said fulcrum point (57) of said bar (58), each arm having a hole wherein is inserted a head (75) which connects to the stub axle assembly.

In all the configurations described, advantageously the replacement of the arms is important as it is necessary to move the fulcrums forward to make room for the differential. However, it is not essential for them to be obviously ambidextrous.

In all the configurations described, said front differential (100) is advantageously connected to the front crossmember by means of elastic joints and/or silent blocks and/or the like both at the front on the part (56) and at the rear on the part (51).

In all the configurations described, advantageously said rear connection of the front differential to said front crossmember comprises a step of connection of the differential with said bar (54) with a rigid type connection.

In all the configurations described, advantageously the parts making up the front crossmember are obtained from folded or press-folded sheet metal, one or more of said parts being further machined by machine tools and wherein the parts are joined.

In all the configurations described, advantageously said joining can be performed by welding.

In all the configurations described, advantageously said front transmission shaft comprises a first section (40a) substantially (or roughly) parallel to the axis of the engine and a second section (40b) with a predetermined angle (α) with respect to said first section (40a).

In all the configurations described, advantageously said angle (α) is in a range comprised between zero and fifteen degrees, preferably between zero and eight degrees and even more preferably between zero and five degrees.

Another object of this invention is also a truck modified in such a way as to be two-wheel or four-wheel drive, preferably a truck of the Piaggio NP6 type, said truck comprising an engine connected to the original vehicle gearbox and a rear transmission shaft, the truck comprising:
- A transfer (30) connected to the original vehicle gearbox, said transfer (30) having a first part whose profile matches the profile of the part of the original vehicle gearbox from which the transmission cover has been removed in order to make the connection, said two profiles being coupled and connected to each other, the transfer (30) comprising a second part containing the transmission gears with a coupling to a front transmission shaft;
- A front crossmember (50) supporting a front differential (100);
- A front differential (100) arranged in the housing formed by said crossmember (50);
- A front transmission shaft which is connected by one end to said second part of the transfer (30) and which, from said second part of the transfer, connects to said front differential (100) by the opposite end;
- And wherein:
   - The front crossmember (50) is made in two or more parts connected to each other in such a way that at least two anchoring zones (53) are obtained, each one forming an anchoring plane (53a) connected to the original vehicle structure and with said crossmember provided with two fulcrum points (57') spaced apart for hinging each one an arm, each one of said two fulcrum points (57') being respectively arranged below said anchoring plane on the side opposite to the surface of the anchoring plane that connects to the original vehicle structure, said two fulcrum points translating the original hinging position of the original arms in such a way as to allow the insertion of the front differential (100), and wherein each arm has a hole into which is inserted a head (75) which connects to the stub axle assembly, the stub axle assembly being a stub axle assembly with three radial arms (80) having a central hole for the insertion of a constant velocity joint.
   - Advantageously, said anchoring zones (53) are in the form of a right and a left zone spaced apart and rigidly joined through a front part (55, 58), said front part comprising a bar (58) having at its two ends a fulcrum point and at the rear through a further bar (52) and two vertical legs (51) each one connected to an anchoring plane on the opposite side to that of connection with the original vehicle structure, said two vertical legs (51) each comprising a hole to which a further bar (54), parallel to the bar (52), is removably connected, and wherein said front differential (100) is arranged in the space laterally delimited by said right and left anchoring parts (53) and at the front by the front part (55, 58) with said front differential fixed underneath the bar (54) and at the front to the front part (55, 58).

In a particularly advantageous configuration the following are provided:
- A transfer (30) connected to the original vehicle gearbox, said transfer (30) having a first part whose profile matches the profile of the part of the original vehicle gearbox from which the transmission cover has been removed in order to make the connection, said two profiles being coupled and connected to each other, the transfer (30) comprising a second part containing the transmission gears with a coupling to a front transmission shaft;
- A front crossmember (50) supporting a front differential (100);

- A front differential (100) arranged in the housing formed by said crossmember (50);
- A front transmission shaft which is connected to said second part of the transfer (30) and which, from said second part of the transfer, connects to the front differential (100);
- And wherein said front crossmember (50) comprises several parts connected to each other in such a way that a front crossmember (50) is obtained having a right anchoring part (53) and a left anchoring part (53) each forming an anchoring plane connected to the original vehicle structure, said right and left anchoring parts (53) being spaced apart and rigidly joined together through a front part (55, 58) comprising a bar (58) having at its two ends a fulcrum point and at the rear through a further bar (52) and two vertical legs (51) each one connected to an anchoring plane on the opposite side to that of connection to the original vehicle structure, said two vertical legs (51) each comprising a hole to which a further bar (54), parallel to the bar (52), is removably connected, and wherein said front differential (100) is arranged in the space delimited laterally by said right and left anchoring parts (53) and at the front by the front part (55, 58) and with said front differential fixed underneath the bar (54) and at the front to said front part (55, 58), and wherein two arms (70), preferably ambidextrous, each one hinged to a fulcrum point of said bar (58), each arm having a hole on the side opposite to that of hinging into which is inserted a head (75) which connects to the stub axle assembly, and in which a stub axle assembly with three radial arms (80) is comprised having a central hole into which a constant velocity joint is inserted.
- A control system is also provided which selectively allows the engagement of the two-wheel or four-wheel drive operating mode.

Advantageously, in all configurations, said front differential (100) is connected to the front crossmember by means of elastic joints and/or silent blocks and/or the like both at the front on the part (56) and at the rear on the part (51).

Advantageously, in all configurations, said rear connection of the front differential to said front crossmember comprises a rigid connection of the differential to said bar (54).

### Brief description of the drawings

Further characteristics and advantages of this truck, according to the invention, preferably of the Piaggio NP6 brand, will be clarified with the description that follows of some of its embodiments, provided by way of non-limiting example, with reference to the attached drawings, wherein:
- Figure 1 represents a schematic solution of the known art;
- Figure 2 shows an overall schematic of the vehicle modified in order to be transformed from two- to four-wheel drive;
- Figure 2A shows a standard vehicle gearbox wherein the original transmission cover is removed to connect it to a transfer;
- Figure 2B shows a transfer that connects to the vehicle gearbox;
- Figures 2C and 2D show the gears present in the transfer and their mode of operation;
- Figure 3A structurally shows the original crossmember while Figure 3B shows the crossmember modified so as to accommodate the differential and the further modifying components;
- Figures 3C to 3H show exploded views of the crossmember modified in order to define it structurally and also from the point of view of its assembly;
- Figure 4 shows said crossmember of Figure 3B assembled and with the components present that it supports;

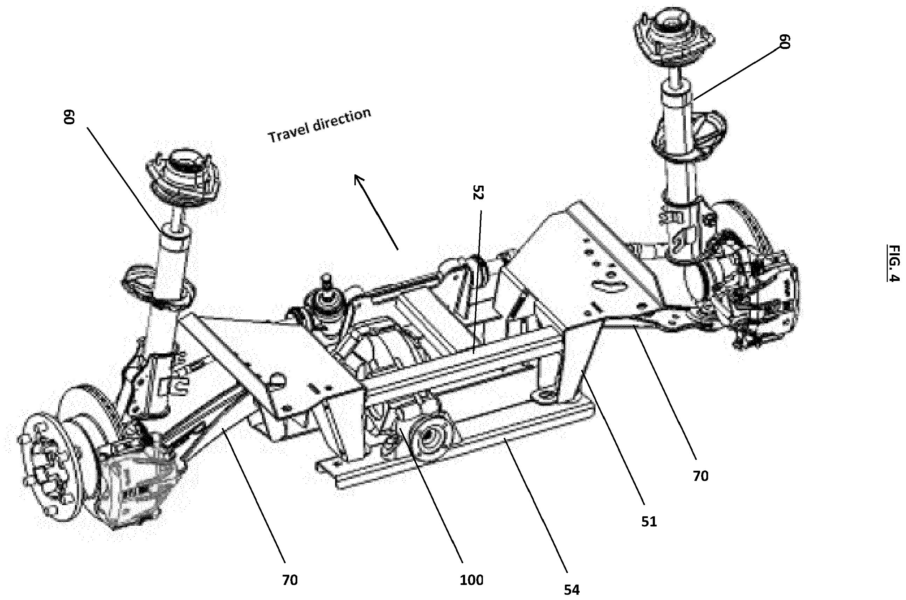

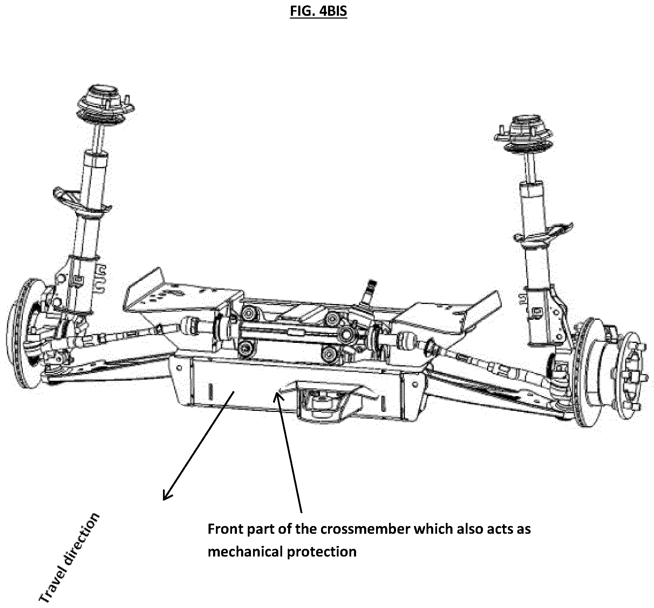

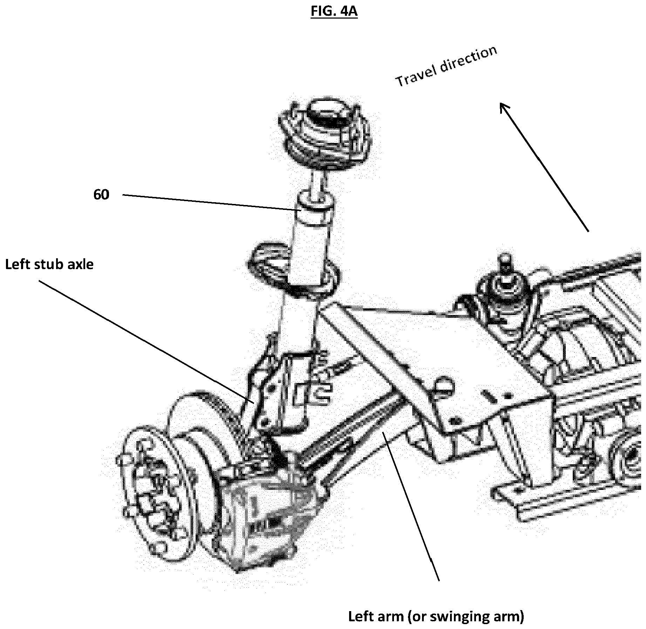

- Figure 4BIS shows two further views;
- Figure 4A shows a section of the cradle and shock absorber;

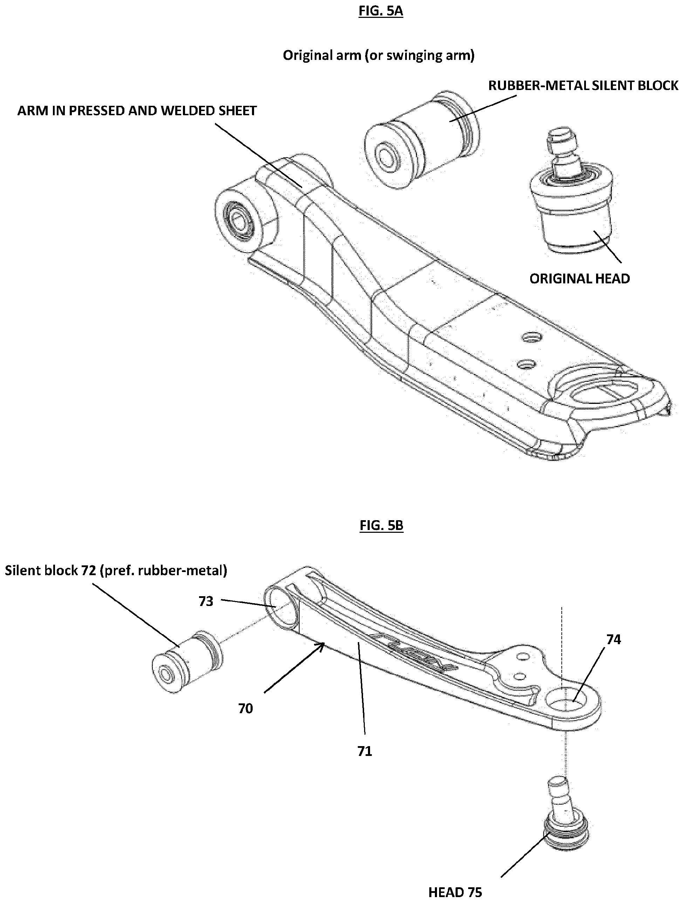

- Figure 5A shows the original swinging arm while Figure 5B shows the swinging arm as modified;

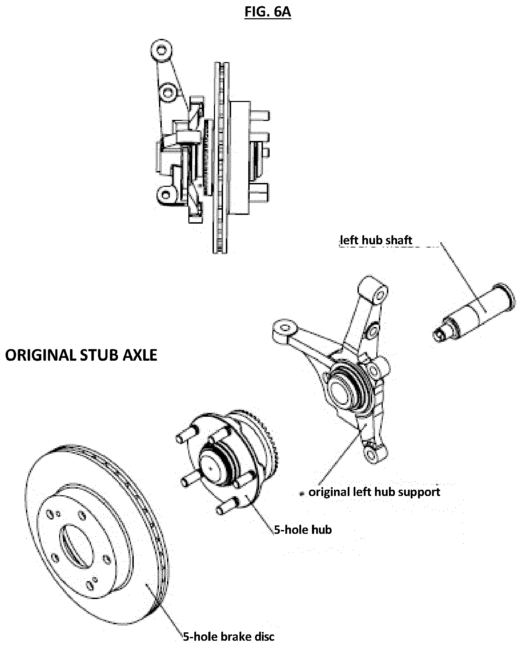

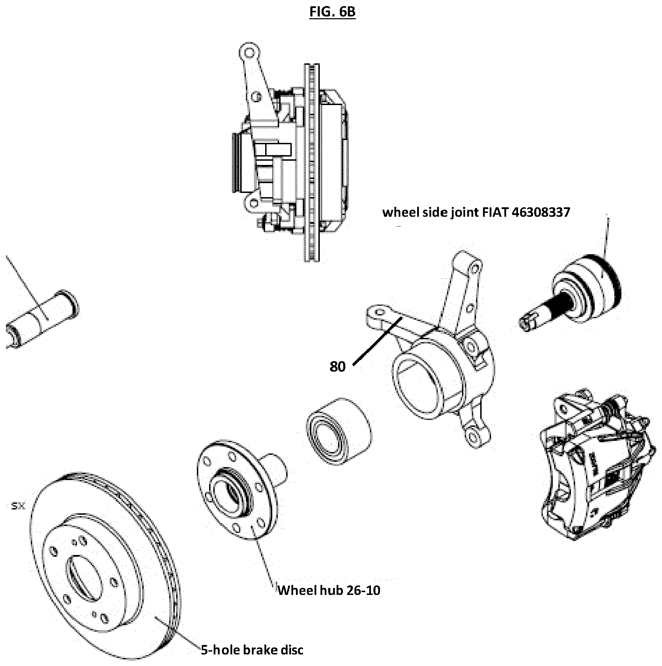

- Figure 6A shows the original stub axle while Figure 6B shows the stub axle as modified;

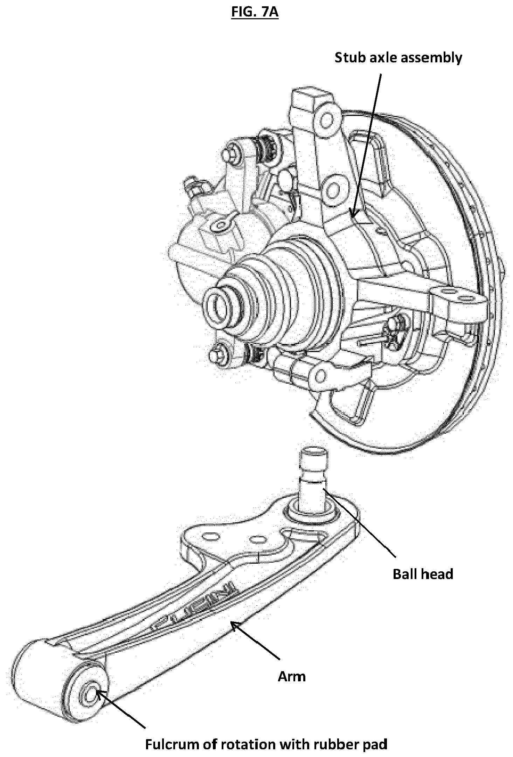

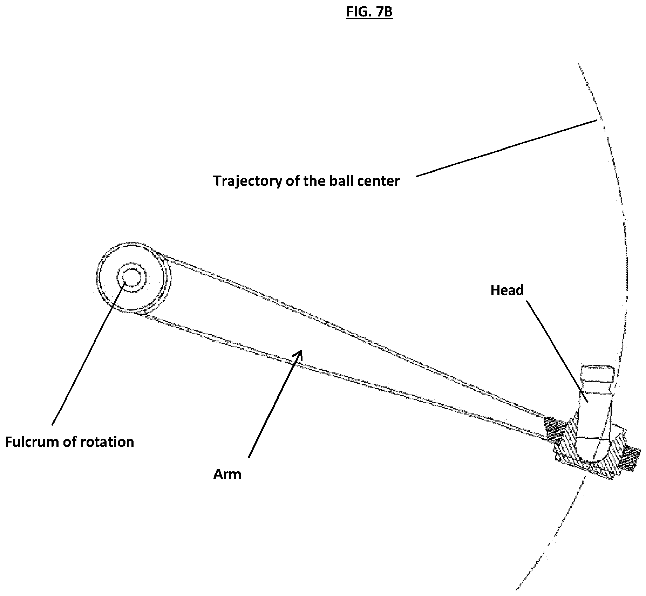

- Figure 7A shows a connection of the arm to the stub axle while Figure 7B schematizes the fulcrum of rotation of said modified arm;

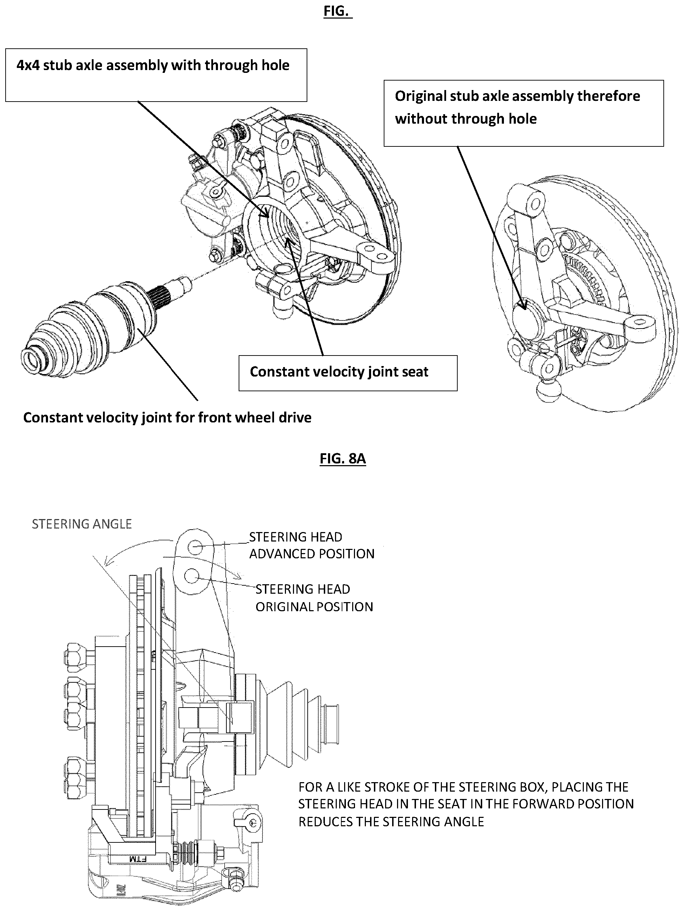

- Figure 8 shows on the one hand the original stub axle which was then modified precisely because the wheel becomes drive wheel and then shows the seat in which the constant velocity joint for front traction is inserted;
- Figure 8A shows a stub axle in side view.

### Description of some preferred embodiments

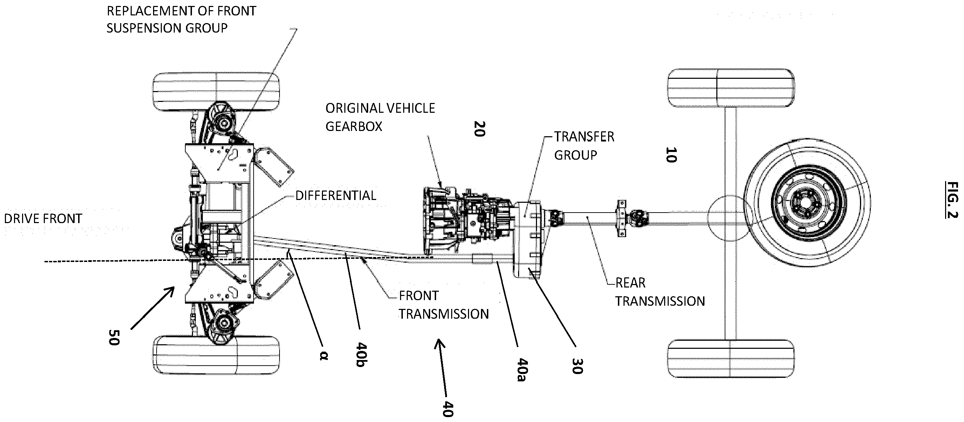

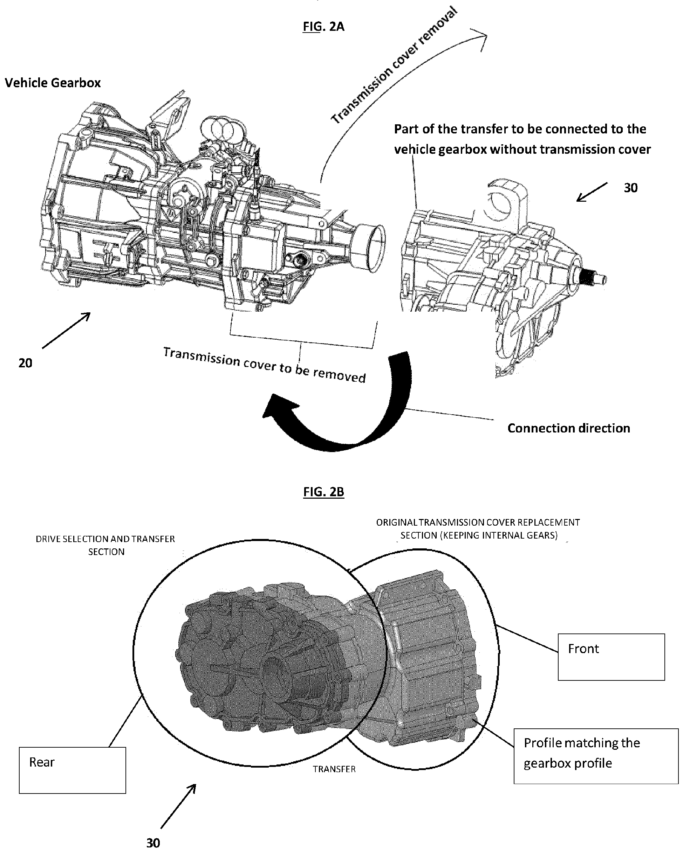

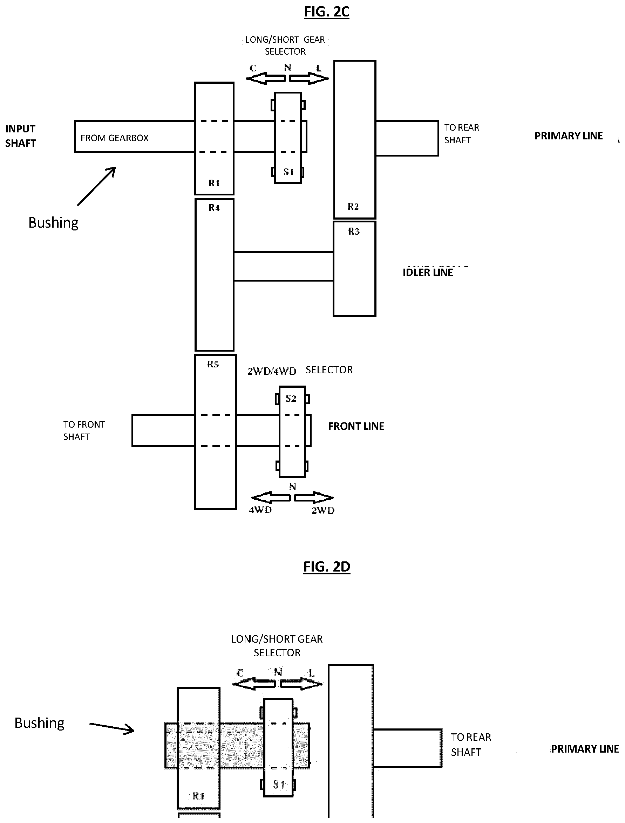

Figure 2 schematizes the overall mechanical system used to transfer part of the traction to the front wheels.

The vehicle of Figure 2 is a truck preferably of the Piaggio brand NP6 model and which is produced as two-wheel drive.

This therefore implies that, with reference to Figure 2, the original vehicle transmits the traction from the original gearbox exclusively to the rear wheels, through the rear transmission shaft 10.

More specifically, the motion, generated by an engine not shown in the Figure, is transmitted to the rear wheels through the original gearbox 20 which is connected to the rear transmission 10.

The additional components described below and present in Figure 2, namely the transfer unit 30, the front transmission shaft 40, the modified crossmember 50 (which replaces the original which is therefore removed), the modified arms and stub axles (which replace the originals which are therefore removed), have been specially designed and integrated in order to transform the vehicle, in particular this vehicle NP6 model, from two- to four-wheel drive and in particular to allow the insertion of the four-wheel drive if and as necessary.

The following modifications are preferably particularly suitable and studied for this type of Piaggio NP6 model truck even if the same could be applied to other types of truck, also of different models and/or different brands.

Therefore, what has been described, although preferably addressed and specific to the Piaggio NP6 model truck, can in any case be considered applicable to other types of truck.

Figure 2, therefore, shows an overall schematic wherein the modifications that will be described in structural detail are integrated.

More specifically, with reference to Figure 2, the normal transmission is provided at the rear through the shaft 10, also indicated in the Figure as "rear transmission".

Thanks to the shaft 10 the rear wheels, as shown still in the schematic diagram of Figure 2, are driving wheels.

The motion transmission occurs or, in any case can be engaged, if necessary, also from the front through the structural modification described below.

In particular, the original vehicle gearbox (also indicated in the Figure with the numbering 20) is connected to the front wheels through a transfer unit 30 which is now interposed between the rear shaft 10 and said gearbox 20 of the vehicle.

In this way, always or only when necessary, the transfer unit 30 can be activated to transfer the motion also from the front. As will be better detailed below, the transfer unit 30 puts in rotation a shaft 40 which represents the front transmission and which therefore transmits the rotation at the front.

The part, therefore, which is towards the drive front, starting from the transfer unit 30 represents the "modified" part in order to obtain a vehicle modified from two- to four-wheel drive.

The components are now described in structural detail:

### THE TRANSFER UNIT 30:

The transfer unit, as anticipated above, serves to bring the traction to the front by transmitting a rotation to an additional transmission shaft (in particular as better described below, shaft 40).

For this purpose, as shown in Figure 2A, the terminal part called transmission cover or "bell" is removed from the original gearbox.

The transmission cover or "bell" is an aluminum shell containing the final gears of the forward and reverse gearbox.

In this way, as shown in Figure 2A, it is possible to connect the transfer 30.

Figure 2A in fact shows with an arrow the removal of the transmission cover and with another arrow shows the connection of the transfer 30 which connects to the remaining part of the gearbox without transmission cover.

The original aluminum casting (transmission cover) is therefore replaced with the special new transfer 30 of specific design and illustrated in isolation in Figure 2B.

This new box 30, as shown in Figure 2B, has a geometry which, in its front part, copies the housings of the original gears (these will be removed from the original seats and repositioned in said front part). Furthermore, it is equipped with a front profile that matches the part of the gearbox without transmission cover in order to be able to couple perfectly with it, allowing a permanent connection, for example with connection systems such as bolts and the like.

The rear part, on the other hand, contains the gear train that constitutes the transfer true and proper.

This gear train consists of three lines which are - in this specific case - the primary, the idler, the front.

Selection of the operating mode takes place through fork selectors which engage the appropriate gears on each other. The gear train receives the drive torque delivered by the original gearbox at its input.

With reference to the following Figure 2C, the following are identified:
S1: normal/reduced gear selector;
S2: 2WD/4WD selector (where WD is the abbreviation of "Wheel Drive");
R1: Primary wheel of reduced gears;
R2: Wheel integral with the rear output shaft;
R3-R4: Idler wheels integral with each other;
R5: Wheel integral with the output shaft at the front;

According to the selected mode, the following cases are possible:
2WD normal gears - the torque is fully transmitted to the rear leaving behavior of the original vehicle unchanged from a functional point of view. Selector S1 engages R2 on the input shaft. R3-R4 are set in rotation by R2 and drag R1 (which runs idly as it is not engaged by selector S1) and R5 (which runs idly not engaged by selector S2) → The torque is transmitted only to the rear.
2WD reduced gears - S1 engages R1 on the input shaft. R1 sets in rotation R3-R4 which transmit the reduced rotation to R2 integral with the rear shaft. R3-R4 transmit the reduced rotation also to R5 but it runs idly, not being engaged by S2.
4WD normal gears - S1 engages R2 on the input shaft. R3-R4 are set in rotation by R2 and drag R1 (which runs idly as it is not engaged by selector S1) and R5. R5 is engaged by the selector S2 on the front shaft and therefore the torque is also transmitted to the front shaft.
4WD reduced gears - S1 engages R1 on the input shaft. R1 sets in rotation R3-R4 which transmit the reduced rotation to R2 integral with the rear shaft. R3-R4 transmit the reduced rotation also to R5 which, being engaged by S2 on the front shaft, also transmits the reduced motion to the front shaft.

The transfer unit 30, when activated, therefore allows the motion to be taken from the original gearbox, thereby transferring a rotation to the specially integrated front transmission shaft.

A peculiarity of the transfer produced for the transformation of the vehicle in question, in particular the NP6 vehicle, is that efforts were made to contain the longitudinal bulk of the transfer.

This was possible thanks to a positioning (Fig.2D) of the gear R1 and of the selector S1 on a bushing inside which the seat of the output shaft of the original gearbox is obtained.

### FRONT DRIVE 40:

As shown still in Figure 2, the front transmission 40 comprises a shaft (40a, 40b) which is arranged at the outlet from the transfer unit 30 and which therefore, thanks to the transfer unit 30, is rotated around its longitudinal axis when the transfer unit is operated to activate the 4x4 drive (also indicated in this text in an equivalent way as 4WD).

In fact, returning to Figure 2C, the front shaft relative to the front line is clearly indicated, which is activated according to the arrangements of the previous paragraph in the case of a 4X4 drive.

Returning to Figure 2, therefore, the configuration of this transmission shaft 40, as schematized in Figure 2, provides for a first section (40a) which is that immediately at the exit of the transfer unit and which develops parallel to the arrangement of the rear transmission shaft 10.

More specifically, the shaft coming out from the transfer towards the front is substantially parallel to that coming in from the gearbox, which in turn is in line with the one coming out towards the rear. However, the rear drive shaft is not aligned with the shaft coming out from the transfer - this is why the cardan shaft is needed; the same applies to the first section of the front drive shaft, which is not aligned with the shaft coming out from the transfer towards the front: here too we have a cardan shaft.

In particular, the section or first section (40a) is substantially parallel to the rear transmission, as indicated and better specified above.

There then follows a section with a predetermined angle (α).

The transmission shaft 40 connects the front flange of the transfer to the flange of the front differential. In the specific case of the NP6, shaft 40 is "split" in two sections (40a and 40b). The first (40a) is, as above, parallel to the drive shaft (not to the rear shaft) and therefore lies in a plane more or less parallel to the longitudinal plane of the vehicle. The second section is inclined in all planes because it has to find the differential.

This angle may lie in a range of angles from zero to fifteen degrees, preferably between zero and eight degrees and even more preferably between zero and five degrees.

The reciprocal angle between the sections (40a) and (40b) allows the front differential to be connected to the transfer avoiding interference with components of the original vehicle that cannot be removed/moved/replaced.

### FRONT CROSSMEMBER 50:

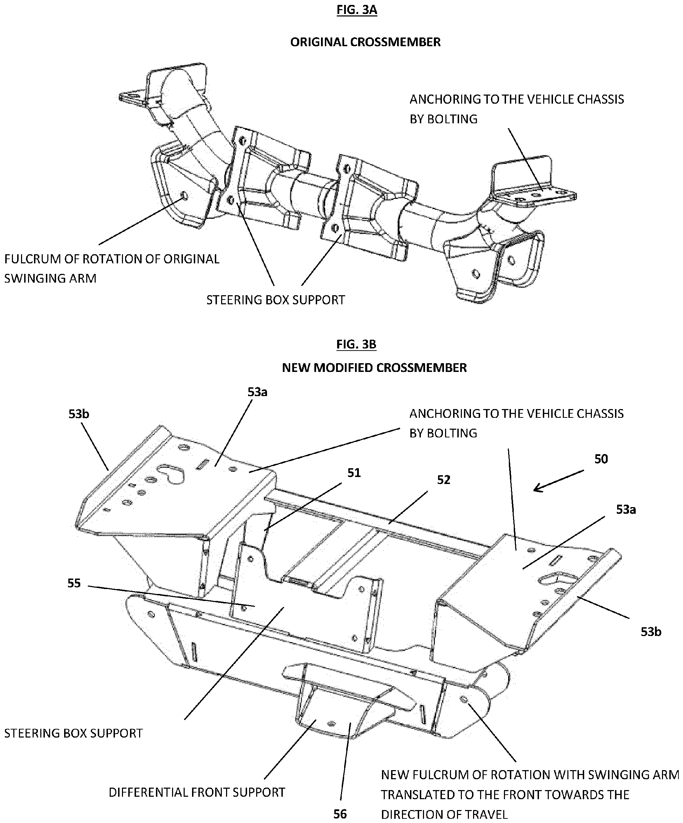

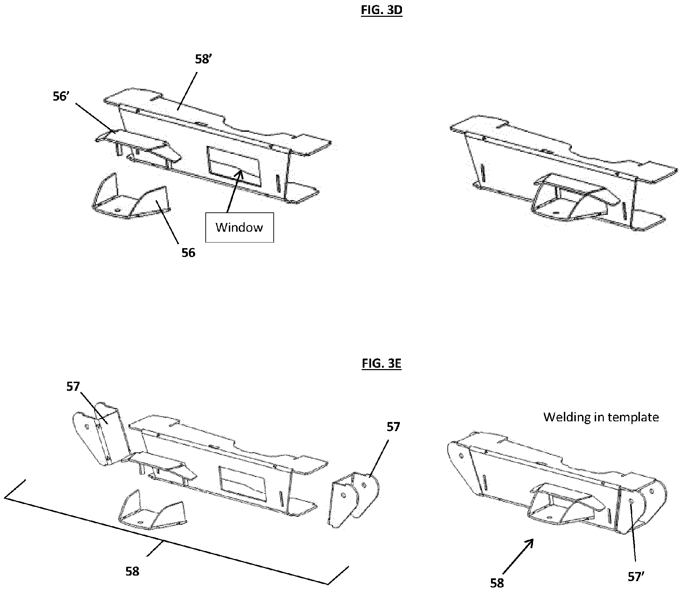

As schematized both in Figure 2 and in Figures 3A and 3B, a new type of bar (or crossmember or cradle) is integrated in the truck in order to allow the application of all the further modifications described below.

It therefore acts as a structural support that connects to the original vehicle chassis.

Figure 3A shows the original crossmember which is therefore removed to be replaced with the new specially designed crossmember.

The new crossmember 50 is shown in Figure 3B which is applied as shown in Figure 2 and Figure 4.

Going more into the structural detail of the invention, the front crossmember 50 was made in order to:
- Be able to connect to the original vehicle chassis;
- Provide the structural function of the original crossbar removed;
- Create the fulcrums of rotation of the swinging arms;
- Create a steering box support;
- Create a support for the front differential;

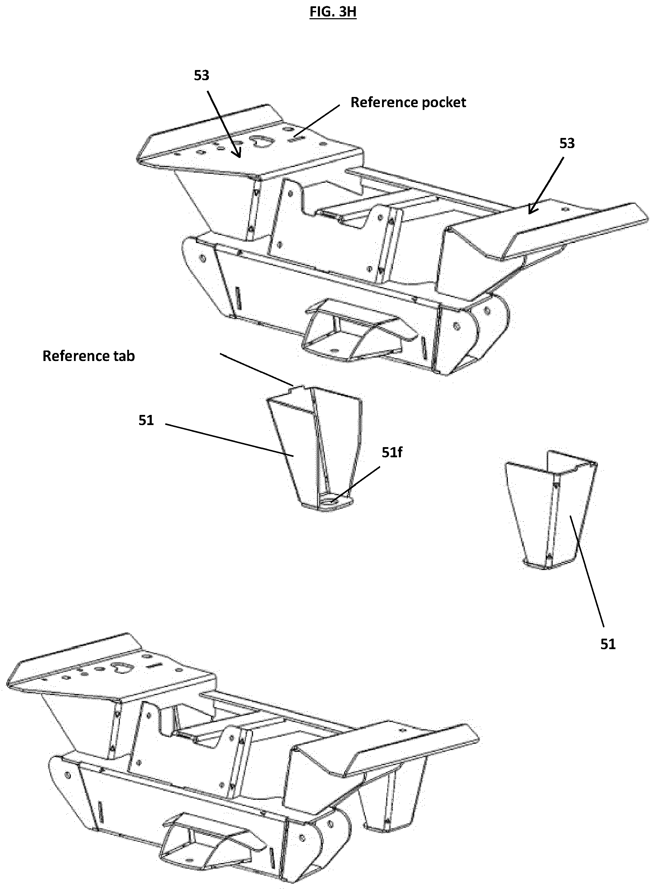

With reference to Figure 3B, two vertical legs 51 are provided, in particular a right leg and a left leg which are clearly visible in the exploded view of Figure 3H.

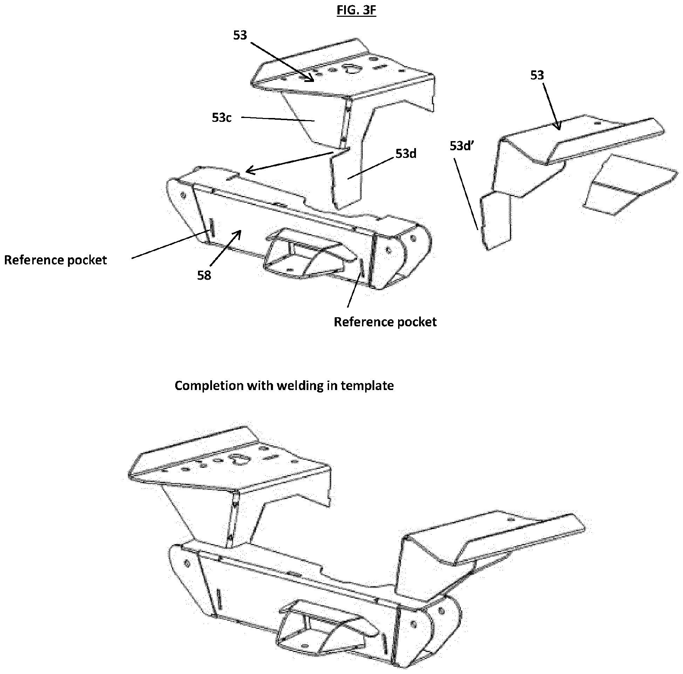

Each one of them is fixed to a part 53 which is clearly visible in the exploded view in Figure 3F.

In particular, there is a right part 53 to which a vertical leg 51 is fixed and a left part 53 to which the other leg 51 is fixed.

Going to Figure 3H, each leg shows a reference tab that inserts into a special pocket made on a flat surface of part 53.

The joining is consolidated by welding.

Each leg 51 has at its base a through hole (51f) also shown in Figure 3H.

With reference for example also to Figure 3B and Figure 3F, the right and left part 53 form a surface for anchoring to the chassis. This anchoring surface is formed by a flat surface 53a with the edge 53b folded upwards in such a way as to retrace the structural angle of the chassis against which it is coupled. The flat surface 53a has various holes (one or more than one) for the insertion of the connection means, generally in the form of bolts.

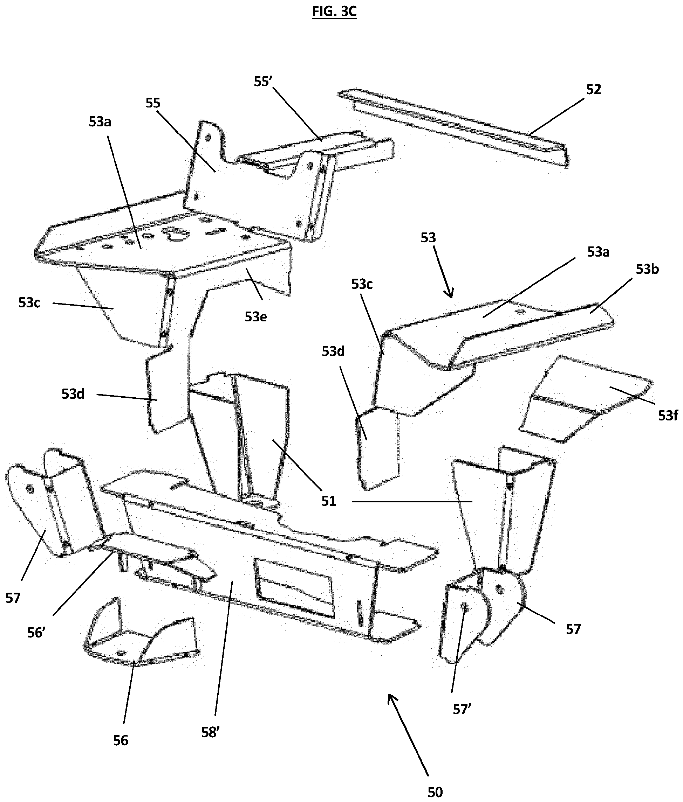

More particularly, structurally, Figure 3C shows an exploded view of the entire crossmember 50 and therefore shows a structure which is symmetrical on the whole and which provides a substantially mirror-like right and left part.

In fact, both the right and the left part include the part 53 on the right and on the left already introduced above, to which a leg 51 is respectively connected. The right assembly formed by the part 53 with its right leg 51 and the left assembly formed by the left part 53 and its left leg 51 are rigidly connected to each other through a bar 52, a bar 58 and a transverse bar (55, 55').

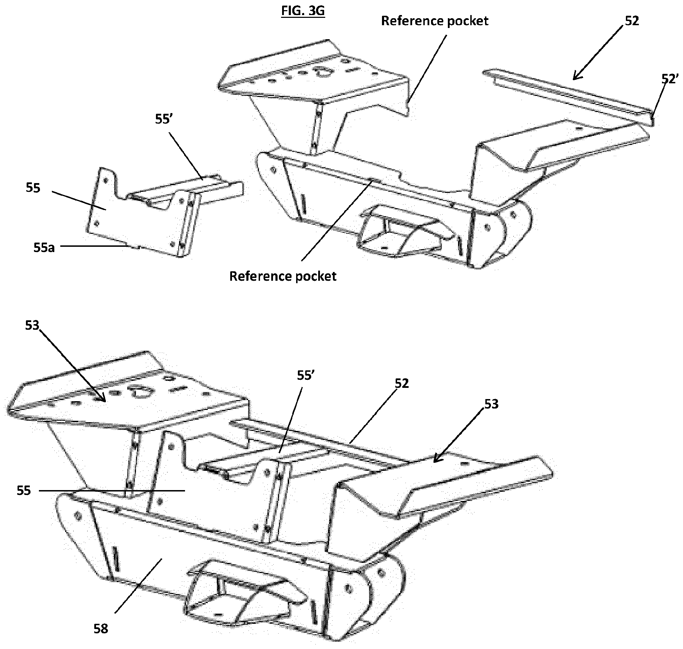

For clarity, the overall assembly of the entire assembled crossmember 50 of Figure 3G shows said bars 52, 58 positioned transversely to connect said right and left parts 53 to each other while the transverse bar (55, 55') runs longitudinally (with reference to the main axes of the vehicle) connecting the bar 52 to the bar 58.

Continuing in more detail on the structure of part 53, this includes as shown in Figure 3C:
A horizontal surface 53a provided with one or more holes;
A vertical wall 53b which is obtained by folding upwards an end section of the horizontal surface;

Conformation of part 53a and 53b would therefore be that of an L laid out on the ground.

On the opposite side to the upward vertical fold 53b, a further vertical wall branches downwards, i.e. the wall (53e) .

Basically the surface (53a) has four perimeter sides. From one of them the wall (53b) runs vertically upwards while on the opposite side the wall (53e) runs downwards.

From a third side the wall (53c) branches downwards and therefore connects angularly with the side (53e).

More specifically, the flap (53c) starts from the more or less vertical edge of the flap (53e), and is integral with it. It extends transversely outwards and is connected, by welding, underneath the part (53a).

The wall (53c) is interrupted before the wall (53e) which extends beyond the wall (53c) forming the part (53d) .

The component (53f) is a reinforcement gusset of the component 53: it is welded in a predetermined position in order to improve the rigidity of the entire cradle.

The overall conformation of part 53 (both right and left) is clearly visible in Figure 3F and, as evident, part 53d and 53c are positioned with respect to one another according to a reciprocal rotation of ninety degrees in order to form an insertion guide with respect to component 58 (see coupling arrow).

The wall 53d also forms an appendage 53d' which is inserted into a suitable notch relative to the component 58 and indicated in Figure 3F as a reference pocket.

Figure 3F therefore shows the two parts 53 connected to part 58.

The stable joining is consolidated by welding.

Figure 3D shows precisely how the previously mentioned bar 58 is obtained.

Taking Figure 3C also as a reference, we proceed with joining part 56 to 56' by inserting the assembly (56, 56') in the appropriate opening (window) obtained in the part 58'.

The two parts 57 are then applied laterally to part 58'.

The whole is again consolidated by welding.

It may be noted that parts 57 have the holes 57' that act as pivots for rotation of the arms.

Added to what is obtained in Figure 3F is the bar 52, having at both its ends an appendage 52' which is coupled with the reference pocket indicated in Figure 3G (precisely to have an exact connection reference), with a stable joint obviously obtained by welding.

The parts 55 and 55' are connected at the front, with care being taken to connect the bar 55' (i.e. its end) to the bar 52. The two bars 52 and 55' are positioned at right angles to each other.

The surface 55 forms a certain inclination with respect to the bar 55' from which it extends and enters the reference pocket of the component 58'.

The whole is welded.

The various parts described are preferably obtained from folded or press-folded sheet metal and machined. The parts are joined together and then welded to form a "whole" as shown in Figure 3H or 2B.

As also shown in Figure 4, both legs 51, thanks to their holes in the base, form an anchoring point to which a rear support bar of the differential 100 is fixed.

Figure 4 also shows very well the front differential 100 which is housed and supported by said front crossmember 50, arranged in the space between the bar 54 and the bar 52 below and above, while at the front is the front part formed by the support for the steering box 55 (see Figure 3B).

The crossmember therefore forms a support cradle and housing for the differential with a protective function as well.

In fact, as shown in Figure 4BIS, which shows a front view of the crossmember, it can be seen that, in the direction of travel (compare also with Figure 4), the differential is totally protected by the crossmember itself (also seen in Figure 4). All of the mechanical parts are therefore hidden and protected from frontal impacts.

### ORIGINAL SHOCK ABSORBERS:

Figure 4A shows the original shock absorbers 60 which are connected to the stub axle and therefore to the wheel on both sides. They perform the primary function of cushioning the vehicle by filtering the transmission to the vehicle chassis of any unevenness of the road surface. In the case of the NP6 vehicle which adopts a *MacPherson* suspension scheme, the shock absorber also performs the function of guiding the travel of the suspension and therefore of the wheel. In this suspension scheme, the elastic element (spring) is joined to the shock absorbers as shown in the image. The spring + shock absorber assembly is also called the telescopic strut. The springs and shock absorbers have not been subject to modifications/replacements. However, it is possible to replace the telescopic strut with other similar ones but with different characteristics (in particular the permitted stroke, the compression and extension parameters, the spring, etc.), in order to modify the height of the vehicle from the ground and, accordingly, the performance and road handling both on-road and off-road.

### NEW SWINGING ARM 70:

The swinging arm, as shown in the enlargement of Figure 4A, is used to connect the stub axle assembly (stub axle + wheel bearing + hub + brake caliper + brake disc, etc.) and therefore the wheel to the new crossmember 50 introduced.

There is therefore a left and right swinging arm (also numbered 70 for both the right and the left).

Figure 5A shows the original prior art solution of the arm.

Figure 5B shows the solution of the arm modified in accordance with the invention.

The current geometry has been studied to obtain an ambidextrous arm in a forging process.

In particular, the arm is symmetrical as a forged piece and is differentiated into (right) and (left) through mechanical machining and insertion of the ball head.

The new suspension arms 70 are made by forging, preferably in C40 steel, and replace the original arms that were of pressed sheet metal. Like the original arm, the new one is connected to the crossmember by means of silent blocks and pin 72, preferably but not necessarily M12 type.

The body 71 shown in Figure 5B is substantially flat.

At both ends it forms two through channels 73 and 74.

Channel 73 receives the silent block while channel 74 receives ball head 75.

Insertion of the head occurs by way of interference.

Figure 5B therefore shows the central body 71 forming the arm which at the rear forms the channel 73 for insertion of the "rubber-metal silent block" component 72.

The silent block is a commercial component that allows the creation of a rotation joint which - thanks to the presence of rubber - partially isolates unwanted vibrations which would otherwise be fully transmitted from the arm to the rigid structure of the chassis, consequently reducing comfort on board the vehicle and potentially leading to structural fatigue problems.

At the front there is the circular cavity (or channel or seat) 74, the axis of which is orthogonal to the axis of the seat 73. Head 75 fits into cavity 74.

The possibility that the axis of the seat 74 of the head deviates from the aforementioned orthogonality is not entirely excluded.

The head 75 is the component that creates a ball joint: it allows connection of the arm to the stub axle.

More specifically, the original suspension (crossmember, arm, stub axle) does not provide for front-wheel drive and does not have the space required for passage of the front half-shafts.

To create a passage sufficient for the half-shafts, it was necessary to move forward the points of rotation of the suspension which are obtained in the crossmember. This involved the creation of a new crossmember (which also integrates the support for the steering box and the front differential). The goal was to maintain the same kinematic behavior as the original vehicle suspension: This is achieved by ensuring that the head ball center of the modified 4x4 suspension travels along the exact same trajectory as the head ball center of the original vehicle. To obtain this result it was necessary to create a specific arm that joins the ideal trajectory to the new fulcrum on the new crossbar.

The overall kinematics of the suspension must allow the stub axle to perform the combination of two movements:
1) roto-translation guided by the telescopic strut (shock absorber) and by the arm according to the scheme commonly known as MacPherson (from Wikipedia, **MacPherson** is a technical suspension scheme for engine vehicles in which the wheels on the same axle oscillate independently by means of triangular-shaped (single) swinging arms, with the spring-shock absorber assembly becoming an integral part of the suspension)
2) rotation around an almost vertical axis to allow steering of the front wheels. In order to allow the above movements, the stub axle must be connected through the ball joint of the head (at the bottom) while the telescopic strut can rotate around its own axis thanks to the upper bearing.

### STUB AXLE 80:

The stub axle 80 or hub support (Fig. 6B) is very clearly represented together with the other components that it interconnects with in Figure 6B.

The stub axle is a component which, in the specific case is made of cast iron and performs, thanks to its geometry, the task of connecting the suspension parts to the wheel. Housed in the stub axle is the bearing to which is connected the hub on which the brake disc will be mounted, followed by the wheel unit (tire + rim). The stub axle carries the anchors for the brake caliper, the seat for connection with the shock absorber, the seat for the head and the fixing point for the steering rod. In this case, there is also the seat for the ABS system sensor. Replacement of the original stub axle was necessary in order to be able to house a wheel hub that allows passage of the front half-shafts for transmission of motion to the front wheels which, in the original vehicle, were idlers. As also highlighted in the further Figure 8A, the new stub axle has been arranged in order to reduce the steering angle. This was necessary because the constant velocity joints have a maximum permitted working angle, this angle being given by the combination of the steering angle (rotation of the wheel around the more or less vertical axis) with the angle due to the suspension travel. The reduction was achieved by lengthening the steering arm, while maintaining the possibility of reproducing the original situation.

### DIFFERENTIAL 100:

The front differential is a differential known of itself, in common (minus the bevel gear) with other vehicles. It is an "open" type differential that is not self-locking or lockable. The differential is necessary for motion of the vehicle: it transmits the input torque from the transmission shaft to the two output shafts. The peculiarity of the differentials is that they allow the two output shafts (and therefore the wheels with connected axles) to have different rotation speeds. This is necessary when cornering as the inside wheels in the curve must travel a trajectory with a smaller radius than the outside wheels, so that the inside wheels must be allowed to rotate at a different number of revolutions from the outside ones. For more extreme use it is possible to replace the open differential with a self-locking or lockable differential. The applicant therefore proposes its own self-locking differential of the TorSen type, that is a differential the locking of which is determined by the transmitted torque of the two output axles; in particular, the differential in question is made by exploiting the sliding of the gears, one on top of the other, in an axial direction. This sliding is opposed by springs. The elastic characteristic of the springs and their number determines the percentage of locking.

They are known in themselves, and for a description of a differential and explanatory images, Wikipedia or any text in that technical field may be consulted.

The differential is therefore applied in its special seat in the crossmember, as shown in Figure 4, fixing it to the bar 54 and at the front to the crossmember. The bar 54 is fixed to the crossmember using a fastening with vibration damping elements.

The same differential 100 is connected at the front to the crossmember, again with a connection which dampens vibrations.

### BRIEF DESCRIPTION OF ASSEMBLY:

Having structurally described the components of the invention, a brief description of the assembly is given below in order to obtain the desired modification on the vehicle in question.

Disassembly is performed of the transmission cover in order to insert the transfer 30 to which the transmission shaft 40 and the rear shaft are then connected.

At the front, disassembly of the entire suspension is performed: the wheels, the two stub axle assemblies (leaving the brake calipers connected to the vehicle system, and similarly the sensors), the struts, the anti-roll bar are disassembled. The shock absorber/spring assembly, disengaged from the stub axles, are left in place.

The steering box is disconnected from the original crossmember leaving it connected to the column, then the crossmember including the original arms is removed, replacing it with the new specific 4x4 one, which is fixed to the chassis by means of the anchor points already present on the vehicle chassis.

The differential to which the end 40b of the transmission shaft is connected can then be fixed in the specific housing formed by said crossmember, as in Figure 4.

The original swinging arms have been removed and replaced with those described in Figure 5B.

At this point, the steering box is reconnected to the new crossmember (55).

The struts are reconnected.

The stub axle assemblies that have been prepared on the ground are installed using the components taken from the original assemblies (brake discs, spacers, etc.).

The anti-roll bar is reconnected.

The brake calipers are reassembled on their supports and the sensors reinstalled.

At this point, the two half-shafts are inserted in the differential and in the wheel hubs already present on the stub axle assembly (rotation of the stub axle around the ball head is exploited); once each half-shaft is in the correct seat, the stub axles can be reconnected to the shock absorbers and to the steering arms, thus completing the geometry of the suspension.

The final operation consists in connecting the differential to the transfer through the transmission shaft.

Finally, the electrical system and the 4x4 and reduced gear controls are installed in the cabin.

## Claims

1. A method for modifying a truck from two- to four-wheel drive, preferably a truck of the Piaggio NP6 type, in such a way as to selectively allow the engagement of a two-wheel or four-wheel drive mode, said truck comprising an engine connected to the original vehicle gearbox and a rear driveshaft (10), the method comprising the following steps:
- Removal of the original transmission cover from said original vehicle gearbox (20) and application of a transfer (30) to the remaining part of the vehicle gearbox, said transfer (30) having a first part whose profile matches the profile of the gearbox part from which said transmission cover was removed, said two profiles being coupled and connected to each other, the transfer (30) comprising a second part containing the transmission gears with a connection to a front transmission shaft (40);
- **Characterized in that** the following additional operations are provided:
- Removal of the original front crossmember and, in its place, anchoring of a new front crossmember (50) modified with respect to the original front crossmember removed, said new front crossmember supporting a front differential (100);
- Arrangement of the front differential (100) in the housing formed by said new modified crossmember (50) ;
- And wherein introduction is provided of said front transmission shaft (40) which is connected, at one end, to said second part of the transfer (30) in engagement with one or more of the transfer gears and, at the opposite end, connecting to the front differential (100) in such a way as to rotate and transmit the acquired rotation to said front differential;
- The new front crossmember being made in two or more parts connected to each other in such a way as to obtain a crossmember having at least two anchoring zones (53) forming, each one, an anchoring plane (53a) which is connected to the original vehicle structure and with said crossmember provided with two fulcrum points (57') spaced apart for hinging of the arms, each one of said two fulcrum points (57') being respectively arranged below said anchoring plane on the side opposite the surface of the anchoring plane that connects to the original vehicle structure, said two fulcrum points translating the original hinging position of the original arms in such a way as to allow the housing of the front differential (100), and wherein the method further provides for removal of the vehicle's original arms and replacement of these original arms with arms (70) of suitable length which are hinged each one to a said fulcrum point (57'), each arm having a hole into which is inserted a head (75) which connects to the stub axle assembly, the method further providing for removal of the original stub axle assembly and its replacement with a stub axle assembly with three radial arms (80) having a central hole for the insertion of a constant velocity joint.

2. The method according to claim 1, wherein, in said new crossmember, said anchoring parts (53) are spaced apart and rigidly joined together through a front part (55, 58) comprising a bar (58) having at its two ends said fulcrum point (57') and at the rear, through a further bar (52) and two vertical legs (51) each one connected to a said anchoring plane on the opposite side to that of connection with the original vehicle structure, said two vertical legs (51) each one comprising a hole to which is fixed a further bar (54) parallel to the bar (52), the method providing for arrangement of the front differential (100) in the space delimited laterally by said anchoring parts (53) and at the front by the front part (55, 58), providing for locking the differential through fixing of the bar (54) to the ends of the vertical legs (51) in such a way that said front differential is connected to said bar (54) and at the front to the front part (55, 58).

3. The method, according to claim 1 or 2, wherein said front differential (100) is connected to the front crossmember by means of elastic joints and/or silent blocks and/or similar, both at the front on a part (56) and at the rear on the part (51).

4. The method, according to one or more of the preceding claims, wherein said connection of the front differential to said front crossmember comprises a step of connecting the differential to said bar (54) with a rigid type connection.

5. The method, according to one or more of the preceding claims, wherein the parts constituting the front crossmember are obtained from folded or press-folded sheet metal, one or more of said parts being further machined by machine tools and wherein the parts are joined together.

6. The method, according to claim 5, wherein said joining occurs by welding.

7. The method, according to one or more of the preceding claims, wherein said front transmission shaft comprises a first section (40a) substantially parallel to the engine axis and a second section (40b) with a predetermined angle (α) with respect to said first section (40a), preferably said angle (α) being in a range comprised between zero and fifteen degrees, preferably between zero and eight degrees and even more preferably between zero and five degrees.

8. A truck modified in such a way as to be two-wheel or four-wheel drive, preferably a truck of the Piaggio NP6 type, in such a way as to selectively allow engagement of a two-wheel or four-wheel drive mode, said truck comprising an engine connected to the original vehicle gearbox and a rear transmission shaft, the truck comprising:
- A transfer (30) connected to the original vehicle gearbox, said transfer (30) having a first part whose profile matches the profile of the original gearbox part of the vehicle from which the transmission cover has been removed to make the connection, said two profiles being coupled and connected to each other, the transfer (30) comprising a second part containing the transmission gears with a connection to a front transmission shaft;
- A front crossmember (50) supporting a front differential (100);
- A front differential (100) arranged in the housing formed by said crossmember (50);
- A front transmission shaft which is connected by one end thereof to said second part of the transfer (30) and which, from said second part of the transfer, connects to said front differential (100) by the opposite end;
- **Characterized in that:**
- The front crossmember (50) is made in two or more parts connected to each other in such a way that at least two anchoring zones (53) are obtained, each one forming an anchoring plane (53a) connected to the original vehicle structure and with said crossmember provided with two fulcrum points (57') spaced apart for hinging each one an arm, each one of said two fulcrum points (57') being respectively arranged below said anchoring plane on the side opposite the surface of the anchoring plane that connects to the original vehicle structure, said two fulcrum points translating the original hinging position of the original arms in such a way as to allow insertion of the front differential (100), and wherein are comprised two arms of predetermined length for connection to the stub axle assembly, each arm having a hole into which is inserted a head (75) which connects to the stub axle assembly, the stub axle assembly being a stub axle assembly with three radial arms (80) having a central hole for the insertion of a constant velocity joint;
- And wherein a control system is included to selectively allow the engagement of a two-wheel or four-wheel drive mode of operation.

9. The truck, according to claim 8, wherein said anchoring zones (53) are in the form of a right and a left zone spaced apart and rigidly joined through a front part (55, 58), said front part comprising a bar (58) having at its two ends a fulcrum point and at the rear through a further bar (52) and two vertical legs (51) each one connected to an anchoring plane on the side opposite that of connection with the original vehicle structure, said two vertical legs (51) each comprising a hole to which a further bar (54), parallel to the bar (52), is removably connected, and wherein said front differential (100) is arranged in the space delimited laterally by said right and left anchoring parts (53) and at the front by the front part (55, 58) with said front differential fixed underneath the bar (54) and at the front to the front part (55, 58), preferably wherein said rear connection of the front differential to said front crossmember comprises a rigid type connection of the differential to said bar (54).

10. The truck, according to claim 8 or 9, wherein said front differential (100) is connected to the front crossmember by means of elastic joints and/or silent blocks and/or similar both at the front on the part (56) and at the rear on the part (51), preferably wherein said rear connection of the front differential to said front crossmember comprises a rigid type connection of the differential to said bar (54).
